Europäisches Patentamt

European Patent Office

Office européen des brevets

(11) Veröffentlichungsnummer : **0 374 805 B1**

(19)

(12) **EUROPÄISCHE PATENTSCHRIFT**

(45) Veröffentlichungstag der Patentschrift :
**02.11.94 Patentblatt 94/44**

(21) Anmeldenummer : **89123405.6**

(22) Anmeldetag : **18.12.89**

(51) Int. Cl.⁵ : **H02K 3/26,** H02K 29/00

(54) **Elektronisch kommutierter Synchronmotorantrieb.**

(30) Priorität : **18.12.88 CH 4645/88**

(43) Veröffentlichungstag der Anmeldung :
**27.06.90 Patentblatt 90/26**

(45) Bekanntmachung des Hinweises auf die
Patenterteilung :
**02.11.94 Patentblatt 94/44**

(84) Benannte Vertragsstaaten :
**CH DE ES FR GB IT LI NL SE**

(56) Entgegenhaltungen :
**EP-A- 0 133 571**
**EP-A- 0 152 508**
**US-A- 4 228 384**

(73) Patentinhaber : **Buck Werke GmbH & Co**
**Geislinger Strasse 21**
**D-73337 Bad Überkingen (DE)**

(72) Erfinder : **Amrhein, Wolfgang, Dr.**
**Lerchenweg 4 b**
**78126 Köningsfeld (DE)**
Erfinder : **Dietrich, Frank, Dipl.-Phys. (FH)**
**Akazienweg 21**
**67434 Neustadt/Weinstrasse (DE)**
Erfinder : **Hugel, Jörg, Prof. Dr.**
**Russenweg 34**
**CH-8008 Zürich (CH)**

(74) Vertreter : **Spott, Gottfried, Dr. et al**
**Patentanwälte Spott und Puschmann**
**Sendlinger-Tor-Platz 11**
**D-80336 München (DE)**

## Beschreibung

Die Erfindung bezieht sich auf einen elektronisch kommutierten Synchronmotor in Form eines Linear- oder Rotationsaktuators gemäß den Oberbegriff des Patentanspruchs 1.

Ein elektronisch kommutierter Synchronmotor dieser Art ist in der EP-A-152508 beschrieben. Dieser bekannte Synchronmotorantrieb weist als Antriebs- bzw. Aktuatorelement einen drehbar gelagerten Permanentmagneten auf; das Antriebselement kann auch ein linearer Permanentmagnet-Aktuator sein, so daß ein Linearmotor gebildet wird. Der Stator ist bei diesen bekannten Synchronmotorantrieb aus einer Wicklung gebildet, wodurch zur Ansteuerung ein elektronisch erzeugter Mehrphasen-Wechselstrom benötigt wird. Die infolgedessen benötigte elektronische Steuerschaltung mit Leistungshalbleitern stellte bislang einen gewissen Aufwand dar, der die im Vergleich zu mechanisch kommutierten Gleichstrommotoren, wie sie z.B. in "etz, Bd.106, Heft 20, elektrische Kleinstmotoren, H. Moczala" beschrieben sind, niedrigeren Herstellungskosten mehr als aufgewogen hat, mit der Folge, daß im Leistungsbereich bis ca. 500 W, dem für Servoantriebe eine hohe Bedeutung zukommt, bislang der mechanisch kommutierte Gleichstrommotor dominiert.

Durch die fortschreitende Miniaturisierung und Integrationsdichte werden elektronische Kommutatorschaltungen jedoch ständig preiswerter, so daß in zunehmendem Maße der Einsatz von gattungsgemäßen elektronisch kommutierten Motoren erwogen wird. Dies gilt insbesondere für Anwendungen, in denen bei mechanisch kommutierten Gleichstrommotoren die von Bürsten-Kommutatorsystem vorgegebene Begrenzung der Drehzahl, des Drehmoments, der Lebensdauer und der Zuverlässigkeit nicht toleriert werden kann.

Unter den mechanisch kommutierten Gleichstrommotoren weist insbesondere der Glockenankermotor Vorteile auf, die bislang mit elektronisch kommutierten Motoren nur schwerlich erzielt werden konnten. Einige dieser Vorteile des Glockenankermotors, wie er beispielsweise in "Trägheitsarme Gleichstrom-Servomotoren für schnelle Bewegungsabläufe, Konstruktion, Elemente, Methoden, II. 10/1975, M. Heyraud" beschrieben ist, sind z.B. die lineare Kennlinie, die niedrige Anlaufspannung, das Fehlen eines Haltemoments sowie von Hysterese- und Wirbelstromverlusten, kleine elektrische und mechanische Zeitkonstanten sowie insbesondere die sehr kleinen Drehmomentschwankungen.

Für den Einsatz der erfindungsgemäßen elektronisch kommutierten Motore als Servoantriebe kommt vor allem einer möglichst geringen Drehmomentschwankung die größte Bedeutung zu. Es wurden daher bereits Versuche unternommen, diesbezüglich Fortschritte zu erzielen.

So wird z.B. in "Feinwerktechnik und Messtechnik 88 (1988), Heft 4, Ein elektronisch kommutierter Scheibenläufermotor mit Samarium-Kobalt-Magneten, J. Lindner" vorgeschlagen, den Anker mit Drahtwicklungen auszustatten und diesem eine rechteckförmige Phasenspannung einzuprägen. Eine relativ hohe Rundlaufgüte bzw. geringe Drehmomentschwankungen werden erreicht, indem eisenlose Wicklungen hoher Phasenzahl mit schwacher Sehnung bzw. Wicklungsverteilung verwendet werden. Eine derartige konzentrierte Wicklung hoher Phasenzahl hat jedoch den Nachteil, daß für die Ansteuerelektronik ein hoher Aufwand erforderlich ist, da jede Phase mit minimal einem, idR. jedoch zwei oder vier Leistungsschaltern kommutiert werden muß. Eine Reduzierung der Phasenzahl bei gleichbleibender Wicklungskonzentration bedingt ebenso wie eine stärkere Wicklungssehnung einen geringeren Wirkungsgrad, wenn ein guter Rundlauf erzielt werden soll. Aus der genannten Druckschrift (J. Lindner) geht ferner hervor, daß z.B. bei einem B-phasigen Scheibenläufermotor bei großer Sehnung der Wicklung der zulässige Winkelbereich für die Blockwerte der Rechteckansteuerung sehr klein wird, wenn eine hohe Rundlaufgüte angestrebt wird. Im Falle einer B-phasigen konzentrierten Wicklung bleibt demgegenüber ein großer Bereich des zur Verfügung stehenden Luftspaltes kupferlos. In beiden Fällen ist daher eine unbefriedigende Motorausnutzung unvermeidbar.

Bei Motoren, die anders als der gattungsgemäße Antrieb mit Nuten ausgestattet sind, sind Maßnahmen bekannt, um den Rundlauf zu verbessern. So wird z.B. in "Elektrische Maschinen, Band 1-3, VEB-Verlag Technik Berlin, 1979, G. Müller" vorgeschlagen, eine Schrägung des Eisenblechpaketes un eine Nutteilung vorzunehmen, in "Valvo Berichte, Band 20, II., Permanentmagnetische Polfühligkeit in Gleichstrommotoren mit Ferroxdure-Segmenten, J. Koch" findet sich der Hinweis, eine geeignete Gestaltung der Magnetforn vorzunehmen, wohingegen in "Bosch technische Berichte, Band 4 (1973), Heft 3, Die Verringerung der Flußschwankung in kleinen Gleichstrommotoren, A. Mohr" eine entsprechende Gestaltung der Nut-Zahn- oder Polschuhgeometrie angeregt ist.

Abgesehen davon, daß diese bekannten Maßnahmen für anspruchsvollere Rundlaufanforderungen häufig nicht ausreichen, liegt ein weiterer Nachteil der bekannten Motoren darin, daß die Nutung einen relativ hohen Herstellungsaufwand zur Folge hat.

Aus der EP-A-0 152 508 ist es bekannt, einen kollektorlosen Synchronmotor mit einer Wicklung zu versehen, die aus einer Multilayerwicklung mit einer Vielzahl von Windungen konstanter Stärke besteht.

In der EP-A-0 133 571 ist ein flacher Rotationsmotor beschrieben, der einen Rotor mit zwei Permanentmagneten und eine Ankerwicklung aufweist, die mehrere Lagen aus sich im wesentlichen radial erstreckenden Leitern besitzt. Hierbei ist die axiale Dicke jedes Leiters der äußersten Schicht im effektiven Bereich (zwischen den beiden radial innen und außen liegenden Leiterenden) geringer gewählt als die Dicke der Leiter in den mittleren Lagen. Dadurch soll eine verbesserte Wärmeabfuhr und damit Kühlung der Ankerwicklung sowie eine Reduzierung des axialen Luftspalts des Motors bei unproblematischer Herstellbarkeit erreicht werden.

Aus der US-A-4 228 384 ist ein Motor mit einem vierlagigen Anker bekannt, der mit einem digitalen Positionsgeber ausgestattet ist. Die einzelnen Windungen der Ankerwicklung besitzen herkömmliche Gestalt.

Der Erfindung liegt die Aufgabe zugrunde, einen elektronisch kommutierten Synchronmotor gemäß den Oberbegriff des Patentanspruchs 1 derart weiterzubilden, daß ein hervorragender Rundlauf bei vertretbarem Herstellungsaufwand erzielbar ist.

Diese Aufgabe wird erfindungsgemäß mit den in dem Patentanspruch 1 angegebenen Maßnahmen gelöst.

Gemäß Anspruch 1 ist demnach vorgesehen, die Wicklung aus mindestens einer gedruckten oder gestanzten Multilayerwicklung zu bilden. Hierdurch wird erreicht, daß beispielsweise durch Versuche oder mittels eines später erläuterten Programms ein Wicklungsverlauf erzeugt werden kann, der eine hohe Rundlaufgüte sicherstellt. Auf Grund der relativ einfachen Herstellung eines derartigen Multilayers ist der Herstellungsaufwand im Vergleich zum Stand der Technik nicht erhöht, im Gegenteil lassen sich die Produktionskosten sogar senken, da sich mittels geeigneter Maschinen problemlos mehrere Wicklungen parallel herstellen lassen, indem eine hohe Stückzahl von Einzelwicklungen zusammen auf einem Nutzen angeordnet wird, welche folglich die gleichen ätztechnischen oder galvanischen Fertigungsprozesse durchlaufen und anschließend leicht vom Nutzen getrennt werden können. Darüber hinaus kommt auch eine Herstellung durch auf Leiterplattenfertigung spezialisierte Firmen in Frage, was u.U. eine weitere Kostensenkung bedingen kann.

Weiterhin ist es, möglich, auf dem Multilayer einen hochauflösenden Winkelsensor zu integrieren. Auch andere elektronische Komponenten, wie Teile der Ansteuerschaltung des Sensors oder der Leistungselektronik lassen sich auf dem Multilayer integrieren; hierdurch wird erreicht, daß ein äußerst kompakter und zuverlässiger Antrieb zur Verfügung steht.

Ferner ermöglicht es die Ausbildung der Wicklung als Multilayer in Form einer gedruckten oder gestanzten Schaltung, die im Stand der Technik nachteilige, durch die Taktung hervorgerufene, auf die elektromagnetischen Kräfte zurückzuführende Geräuschentwicklung der Drähte der Wicklung praktisch völlig auszuschalten, da benachbarte Leiterbahnen voneinander räumlich getrennt und auf einem schwingungsdämpfenden Kunststoff- oder Glasfaserträger befestigt sind. Auch der relativ hohe Aufwand für Wickelmaschinen sowie für die Montage läßt sich deutlich verringern. Schließlich ermöglicht es die gedruckte oder gestanzte Schaltung, die Leiterbahnbreiten in der angegebenen Weise zu variieren, so daß eine noch bessere Motorausnutzung, ein erhöhter Wirkungsgrad sowie ein vergleichmäßigter Rundlauf erzielbar ist.

Da, wie bereits erläutert, der Aufwand für die Steuerelektronik im Vergleich zu den Herstellungskosten ständig mehr in den Hintergrund tritt, wird der verbesserte Gleichlauf erzielt, ohne daß die Herstellungskosten des Gesamtsystems im Vergleich zu den gattungsgemäßen Einrichtungen in nennenswerten Umfang erhöht werden würden.

Ferner kann die Integration eines hochauflösenden Winkelgebers oder zusätzlicher anderer Geber bzw. Sensoren vorgesehen sein, indem z.B. direkt auf den Multilayer Schaltungsbestandteile desselben integriert werden oder indem die Rotorscheibe gleichzeitig die Funktion eines Trägers für Teile des Sensors übernimmt. Hierdurch ist eine platzsparende Gesamtkonstruktion realisierbar.

Weitere vorteilhafte Weiterbildungen der Erfindung sind Gegenstand der übrigen Unteransprüche, wobei Versuche ergeben haben, daß eine die wesentlichen Merkmale dieser Ansprüche aufweisende Ausführungsform des Motors hinsichtlich Gleichlaufgüte, Drehmomentschwankung und Wirkungsgrad sogar vergleichbaren Glockenankermotoren überlegen ist.

Die Erfindung wird nachstehend anhand der Beschreibung von Ausführungsbeispielen in Form von Scheibenläufermotoren unter Bezugnahme auf die Zeichnung näher erläutert. Es zeigen:

Fig.1: zwei Ausführungsformen des magnetischen Rückschlußjoches, nämlich

a) einen massiven Rückschluß in Form eines Eisenjochs bzw. einer Trägerplatte für den Permanentmagnetrotor;

b) einen geblechten ringförmigen Rückschluß als Träger für die Statorwicklung;

Fig.2: anhand eines Querschnitts eine Ausführungsform der Erfindung in Form eines Synchronmotors mit integriertem optischen Dreikanal-Encoder;

Fig.3: Ätzmasken einer inkrementalen Encoderscheibe, die zwei um 90 Grad versetzte Strichrasterblöcke sowie eine Referenzmarke aufweist;

Fig.4: die Vorderseite des Leiterbahnbildes einer Wicklungsebene einer 8-poligen 5-Phasen-Evolventenwicklung;

Fig.5: die Vorderseite des Leiterbahnbildes einer Wicklungsphase einer 12-poligen 3-Phasen-Spiralwicklung;

Fig.6: eine Spiralwicklungsphase mit verbreiterten Leiterbahnführungen außerhalb des magnetischen Luftspaltfeldes.

Fig.7: in einem Explosionszeichnungs-Querschnitt einen Wicklungs-Multilayer;

Fig.8: Ätzmasken einzelner Multilayerschichten einer Phase, nämlich a) der Oberseite und b) der Unterseite;

Fig.9: Ätzmasken einer Elektronik-Trägerfolie mit einer Wicklung zur Temperaturbestimmung;

Fig.10: ein Ausführungsbeispiel, bei dem ein ohmsches Leitplastikpotentiometer als Lagesensor integriert ist;

Fig.11: anhand eines Blockschaltbilds eine elektronische Ansteuerungsschaltung des Motors; und

Fig.12: anhand eines Blockschaltbildes den Einsatz eines Leitplastik-Potentiometers als Signalgeber.

Das Ausführungsbeispiel des erfindungsgemäßen Motors zeichnet sich im wesentlichen durch die nachfolgend erläuterte Problemlösung aus: Schaffung eines 3-phasigen Synchronmotors mit elektronischer Ansteuerung in drei Versionen:

a) Integration eines hochauflösenden 3-Kanal-Encoders mit 500 Impulsen pro Umdrehung für anspruchsvolle Positions-, Drehzahl- und Drehmoment-Regelantriebe;

b) Integration eines hochauflösenden Leitplastikpotentiometers, das besonders für Anwendungen mit großem Temperaturbereich geeignet ist;

c) Integration eines Minimalencoders, sowie einer Steuer- und Leistungselektronik in SMD-Technik für einfache, sehr verlustarme DC-Steuerungen, wie Batterieantriebe;

d) zusätzliche Integration einer Temperaturmeßsonde direkt auf der Wicklung;

e) zusätzliche Integration der Ansteuerschaltung auf der Wicklung oder im Motorgehäuse.

Die wichtigsten Betriebsparameter des erfindungsgemäßen Motors sind eine extrem hohe Rundlaufgüte, eine kleine Motorregulierungskontrolle, ein hoher Wirkungsgrad, ein hohes Nennmoment, geringe Leerlaufverluste (Batteriebetrieb) und eine lineare Charakteristik.

Aus den genannten Forderungen resultieren grundlegende Konstruktionsprinzipien, von denen die wichtigsten im folgenden erläutert werden.

Für eine günstige Auslegung des magnetischen Kreises empfiehlt es sich, wenigstens eine Dimension des Motors im Vergleich zu den restlichen besonders klein zu wählen. So werden bei zylindrischen Motoren mit radialer oder diametraler Magnetisierung die besten Ergebnisse in bezug auf die magnetische Steuerung und Wicklungsausnutzung erzielt, wenn die Motorlänge im Vergleich zum Motordurchmesser möglichst groß gewählt wird. Bei Flachmotoren mit axialer Magnetisierung verhält es sich umgekehrt. Hier sollte das Verhältnis von Motorlänge zum Durchmesser möglichst klein sein. In Anbetracht der Möglichkeit einer Integration eines hochauflösenden Encoders (großer Durchmesser), sowie einer Integration von Steuer- und Leistungselektronik bietet sich die Flachbauweise an.

Die Flachmotoren bieten für zahlreiche Anwendungen große konstruktive Vorteile, sind aber in viel geringerem Umfang industriell verfügbar als die zylindrische Ausführung.

Während bei Kommutatormotoren eine hochpolige Magneterregung durch ein kompliziertes und somit teures Bürstensystem erschwert wird, kann beim Synchronnotor dieser Freiheitsgrad voll ausgenutzt werden. Eine hochpolige Ausführung führt zu kleineren weichmagnetischen Rückschlußquerschnitten sowie zu einem günstigen Verhältnis von aktiver Wicklungslänge zur Wicklungsgesamtlänge. Die Grenzen bezüglich der Wahl der Polzahl sind durch die zunehmenden magnetischen Streufelder und Wirbelstrom- bzw. Hystereseverluste gegeben. Magnetische Feldberechnungen führen unter den gegebenen Randbedingungen zur optimalen Polzahl. Eine detaillierte Darstellung hierzu befindet sich in der Dissertation Nr. 8745, ETH-Zürich, "Beiträge zum Entwurf von permanenterregten Kleinmotoren hoher Rundlaufgüte", W. Amrhein.

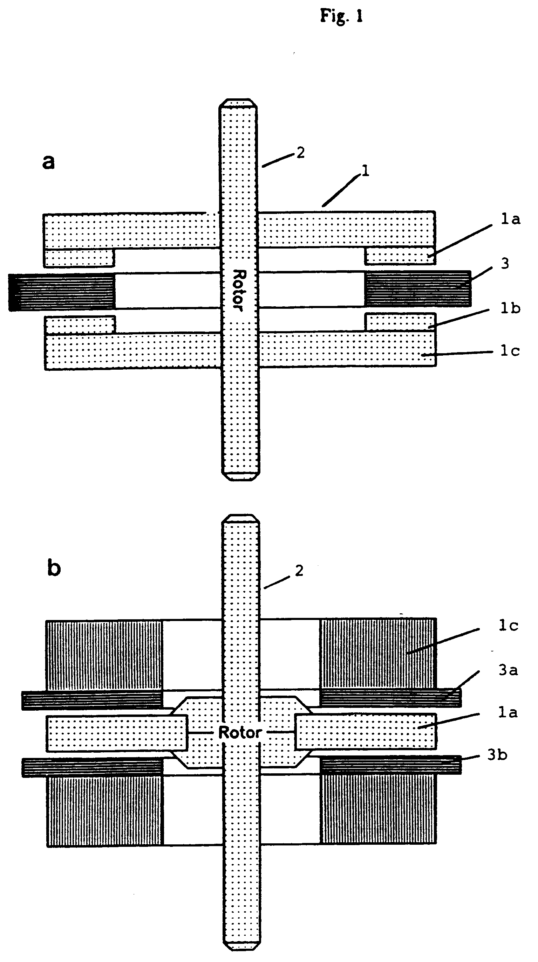

Ein wichtiger Gesichtspunkt für die Motorenentwicklung ist die konstruktive Gestaltung des Rückschlußjoches, wobei in Figur 1 zwei mögliche Prinzipien dargestellt sind, nämlich a) ein rotorseitiger Eisenrückschluß und b) ein statorseitiger Eisenrückschluß.

Beide Prinzipien sind brauchbar und haben ihre Vor- und Nachteile; je nach Zielsetzung wird man sich für die eine oder andere Variante entscheiden. Um eine Auswahl treffen zu können, sind die wesentlichen Vor- und Nachteile der beiden Systeme in der Tabelle 1 einander gegenübergestellt. Ausschlaggebend für die Wahl des rotorseitigen Rückschlusses sind im wesentlichen, daß der magnetische Kreis frei von Wirbelstrom- und Hystereseverlusten ist, die Ausnutzung des weichmagnetischen Materials erheblich besser ist als bei statorseitigem Rückschluß und die Störgeräusche bei getakteter Motoransteuerung entfallen.

Je nach Bedarf können mehrere Rotor- und Statorelemente mechanisch hintereinandergeschaltet werden, wobei zwei benachbarte gleiche Elemente zu einem Element vereinigt werden können, z.B. zwei benachbarte Rückschlußscheiben.

Die Ausführung der Permanentmagnetbestückung kann ebenfalls variieren. Zum einen ist es möglich, die Magnetsegmente zu fertigen und diese dann zum Beispiel auf einem Träger zusammenzufügen; andererseits kann man auch einen Magnetring fertigen und die gewünschte Magnetpolkonfiguration aufmagnetisieren. Der Magnetring kann freitragend oder auf einer Trägerplatte montiert sein.

```
Tabelle 1:
Vergleich  der  resultierenden  Vorteile  und  Nachteile bei
rotorseitigem bzw. statorseitigem Eisenrückschluß (vgl. Fig.
1)
```

| Auswahl-kriterien | rotorseitiger (massiver) Eisenrückschluß | statorseitiger (geblech-ter) Eisenrückschluß |
|---|---|---|
| Wicklung | kompakte, freitragende Wicklung; | zweiteilige Wicklungs-konfiguration auf Trä-gerplatten (gute Stabili-tät); |
|  | Wärmeabfuhr über die äußere Einspannvor-richtung; | Wärmeabfuhr über den ge-samten Wicklungsquer-schnitt; |
| Rück-schluß-joch | einfacher, massiver | gewickelter Ringbandkern; |

| | | |
|---|---|---|
| | Rückschluß; | |
| | keine Hysterese- und Wirbelstromverluste; | magnetische Verluste unvermeidbar; |
| | Material mit extrem hoher Sättigungsinduktion verwendbar; | nur Material mit sehr niedriger Koerzitivfeldstärke empfehlenswert (=> niedrige Sättigungsinduktion); |
| | Material kann bis an Sättigungsgrenze ausgenutzt werden; | hohe Induktion vergrößert die Verluste erheblich; |
| | ungehinderte Flußverteilung möglich; | durch Blechung vergrösserter effektiver Luftspalt; |
| | kompakt; einfach Herstellung; | großes Volumen, kostenintensiv; |
| Permanentmagnete | auf Trägerplatte fixiert, hohe Festigkeit gegenüber Schock und Vibration; deshalb große Ringbreiten zulässig; | freitragend, bei sprödem Material (bsd. Ferrite und Selten-Erden-Magnete) Bruchgefahr; |
| Betriebseigenschaften | kleine Regulierungskonstante und somit großer Wirkungsgrad; keine Störgeräusche durch Magnetostriktion bei getakteter Ansteuerung | kleine mechanische Zeitkonstante (kleines Massenträgheitsmoment); Störgeräusche größer |

Um permanentmagnetische Rastmomente, die durch die Statornutzung bedingt sind, völlig auszuschalten, wird der Servomotor erfindungsgemäß mit einer eisenlosen Flachwicklung ausgerüstet. Es entfallen somit zusätzliche Probleme wie Zahnkopfsättigung, verstärkte Ankerrückwirkung oder Nutschrägung. Bezüglich der Wicklungsausführung sind verschiedene Lösungen realisierbar.

Die Wicklung wird durch Anwendung der gestanzten oder gedruckten Technik realisiert. Unter Beachtung der eingangs definierten Zielsetzung sprechen mehrere Faktoren für einen Multilayeraufbau unter Anwendung moderner Feinätztechnologie oder unter Anwendung eines speziellen und später noch beschriebenen Prozesses, bei welchem die Leiterbahnen galvanisch aufgebaut werden. Hierdurch ergeben sich die Vorteile eines zusätzlichen Freiheitsgrades (variabler Leiterquerschnitt, was für die Flachwicklung besonders interessant ist), einer einfachen Integration der elektrischen Schaltung des Winkelgebers und des Temperaturfühlers direkt auf dem Wicklungsprint, von berührungsfreien Leiterbahnen (somit keine Geräuschentwicklung bei getakteter Wicklungsspeisung), der Erzielung relativ hoher Füllfaktoren und einer einfachen Herstellung sowie Montage.

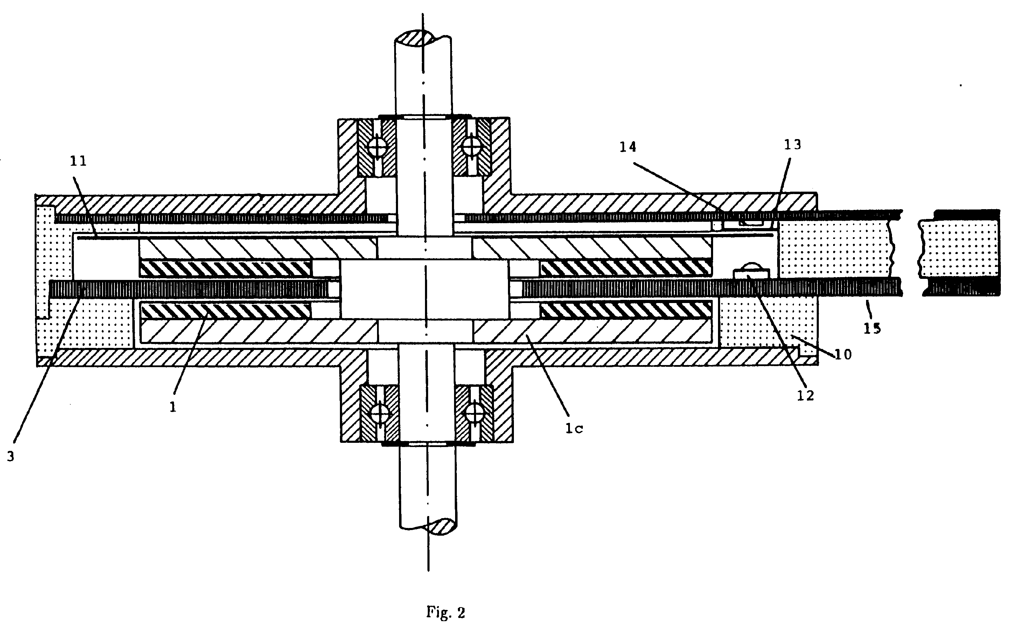

In Fig. 2 ist der konstruktive Aufbau des Micro-Synchronmotors dargestellt. Im Zentrum des Motors befindet sich der Wicklungs-Multilayer. Dieser ist laminar unterteilt in vier Lagen: den drei Wicklungsphasen sowie einer Lage für die senderseitige SMD-Schaltung mit integriertem Temperaturfühler.

Die Wicklung 3 wird von einem symmetrischen Flachrotor 1 beidseitig umschlossen. Der Läufer besteht aus zwei weichmagnetischen Trägerplatten 1c hoher Sättigungsinduktion, die beispielsweise mit SmCo- bzw. NeFeB-Magnetscheiben bestückt sind. Diese Materialien weisen die zur Zeit höchste Energiedichte auf und erlauben zum Beispiel im Vergleich zu Ferritmagneten eine starke Reduzierung des Bauvolumens.

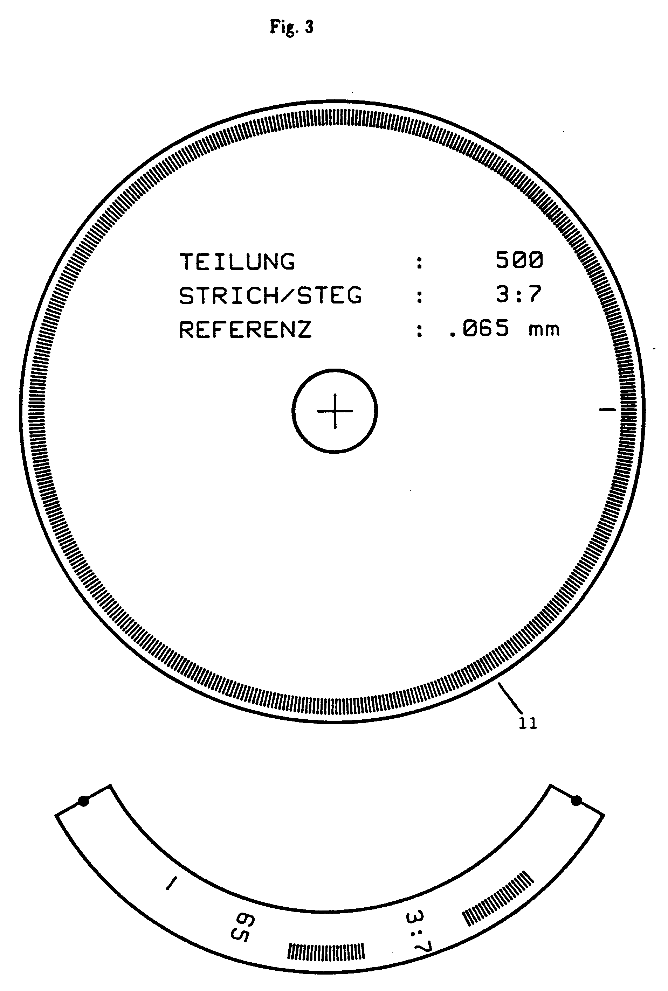

Auf einer der beiden Magnetträgerplatten 1c ist die optische Codescheibe 11 mit einer Teilung von 500 Strichen pro Umdrehung sowie einer Referenzmarke befestigt (s. Fig. 3). Über die Blende 13 (s. Fig. 3), die aus zwei um 90 Grad versetzten Strichrasterblöcken besteht, treffen Lichtpulse auf die drei optischen Sensoren 14. Das Signal wird vorort auf der gedruckten Schaltung verstärkt, flankenbereinigt und an den Anschlußsockel 15 geleitet. Die Ansteuerung der Wicklungsphasen erfolgt somit synchron mit der aus den Encodersignalen ermittelten Rotorposition.

Die Wicklung 3 sitzt auf einem in der Zeichnung mit Punkten überzogenen Tragring auf. Dieser verleiht der Wicklung zusätzliche Stabilität und kann gleichzeitig zur Wärmeabfuhr genutzt werden, wenn er beispielsweise aus einem metallischen Werkstoff aufgebaut ist. Im letzten Fall ist dafür zu sorgen, das die Leiterbahnen elektrisch nicht kurzgeschlossen werden.

Das erfindungsgemäße Motorkonzept erfordert für die Ankerausführung eine Flachwicklung, in welcher der Wickelkopf innerhalb der Wicklungsebene liegt. Die Wicklungstechnologie sollte zusätzlich die Integration einer elektrischen Schaltung (SMD-Technik), von optoelektrischen Bauteilen für Encoderfunktion und einer Temperaturmeßsonde unterstützen. Diesbezüglich bietet sich eine Multilayer-Wicklungsausführung als gedruckte Schaltung an. Vorversuche zeigten, daß sich hinsichtlich des Leiterbahnquerschnittbildes gute Ergebnisse erzielen lassen.

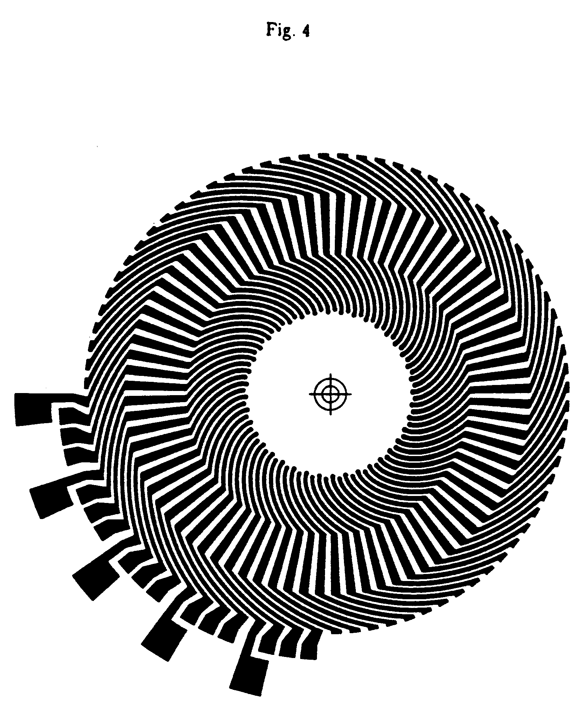

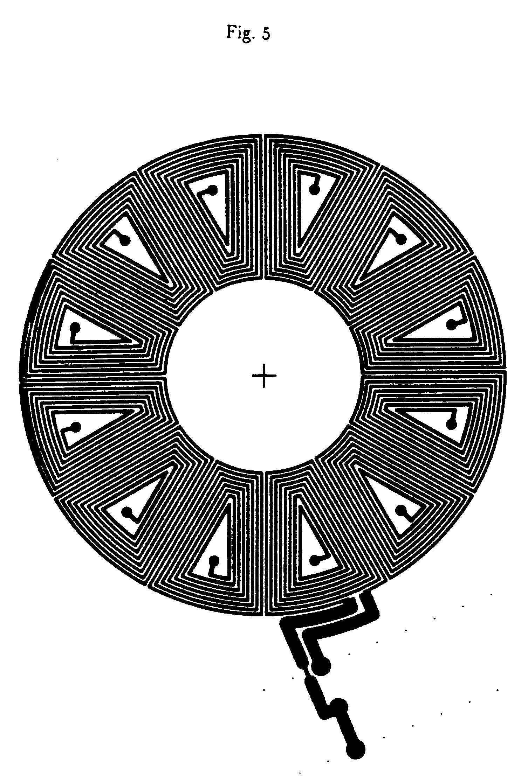

Für die Ausführung der Wicklungsstruktur stehen zwei Varianten zur Verfügung, nämlich die Wellenwicklung und die Schleifenwicklung. Beide Wicklungsarten sind in den Fig. 4 und 5 gezeigt. Bei der ersten Variante handelt es sich um eine Evolventenwicklung, die so nach der geometrischen Form der platzsparenden Rückführungsabschnitte der Leiterbahnen benannt ist. Die zweite Variante wird als Spiralwicklung ausgeführt. Die Vor- und Nachteile dieser Struktur sind in Tabelle 2 gegenübergestellt.

Tabelle 2:

Vergleich der Eigenschaften von Evolventen- und Spiralwicklung

| Beurteilungskriterien | Evolventenwicklung | Spiralwicklung |
|---|---|---|
| Wicklungsart | Wellenwicklung | Schleifenwicklung |
| Phasenaufteilung | n Phasen pro Ebene | eine Phase pro Ebene |
| Flexibilität in der Wahl der Wicklungsebenen | beliebig | nur ganzzahlige Vielfache der Phasenzahl |
| Flexibilität in der Leiterbahngestaltung | klein | sehr groß |
| Wickelraumausnutzung bei konstanter Leiterbreite | mäßig | sehr gut |
| Begrenzung der minimalen Leiterbahnbreite | minimaler Bohrungsdurchmesser | Ätztechnologie |
| Anzahl benötigter Durchkontaktierungen | sehr groß | klein |
| Fertigungskosten | | wesentlich kleiner |

Eine große Bedeutung bei der Wicklungsauslegung kommt der Beachtung der Wirbelstromverluste zu. Im Gegensatz zu konventionellen Drahtwicklungen führt die Verwendung von Flachleitern (Breite/Höhe >1) zu ungünstigen Verhältnissen. Wie Untersuchungen in der genannten Dissertation zeigen, ist besonders bei hochpoligen Magnetkreisen und hohen Rotordrehzahlen eine sorgfältige Auswahl der Leiterbahnbreite erforderlich. Im Gegensatz Zur Spiralwicklung befinden sich bei der Evolventenwicklung die vermessungskritischen Durchkontaktierungen auf dem Innenradius der Wicklung und bestimmen somit die minimale Leiterbahnbreite.

Um die Wirbelstromverluste so klein wie möglich zu halten, sollten besonders bei hochpoligen oder Hochgeschwindigkeits-Antrieben die Leiterbahnen in Bereich des Luftspaltfeldes sich in Richtung größerer Radien nicht verbreitern. Während dies bei der Spiralwicklung keine Probleme bereitet, führt diese Maßnahme bei der Evolventenwicklung zu einem schlechten Kupferfüllfaktor, da hier die Leiteranzahl vom Radius unabhängig ist. Ein weiterer Vorteil der Spiralwicklung zeigt sich in dem zusätzlich verfügbaren Freiheitsgrad bezüglich der Leiterbahngeometrie. Diesem Punkt wird große Bedeutung beigemessen, was nachfolgend noch behandelt wird.

Die Fertigungskosten werden im wesentlichen durch die Art und Anzahl der Durchkontaktierungen beeinflußt. Während bei der Evolventenwicklung die Anzahl der nötigen Durchkontaktierungen der doppelten Leiterbahnzahl entspricht, wovon die Hälfte auf dem bemessungskritischen Innenradius der Wicklung liegt, befindet sich auf der Spiralwicklung nur eine der Polzahl entsprechende Anzahl von Durchkontaktierungen, deren Anordnung im Zentrum der Spirale hinsichtlich des Platzbedarfs völlig unkritisch ist.

Verschiedene Freiheitsgrade zur Gestaltung der Spiralwicklung werden in folgenden beschrieben.

Die Integration zum Beispiel eines hochauflösenden optischen Winkelencoders im Motorgehäuse führt zwangsläufig zu einem vergrößerten Motorgesamtdurchmesser.Der zusätzlich zur Verfügung stehende Bauraum wird durch eine angepaßte Wicklungsauslegung drehmomenterzeugend ausgenützt. Dies erfolgt durch eine Vergrößerung des Wicklungsdurchmessers sowie andererseits durch eine Variation der Leiterbahnbreite innerhalb der Wicklungsstruktur. Windungsrückschlüsse, die außerhalb des magnetischen Luftspaltfeldes liegen und somit keine Wirbelstrombremsmomente erzeugen, werden in verbreiterter Form ausgeführt. Diese Maßnahmen bewirken eine Erhöhung der Leiterbahndichte, eine Verlängerung der radialen (drehmomenterzeugenden) Leiterzüge, eine Verkleinerung des Wickelkopfwiderstandes, eine bessere Motorausnutzung und einen höheren Wirkungsgrad.

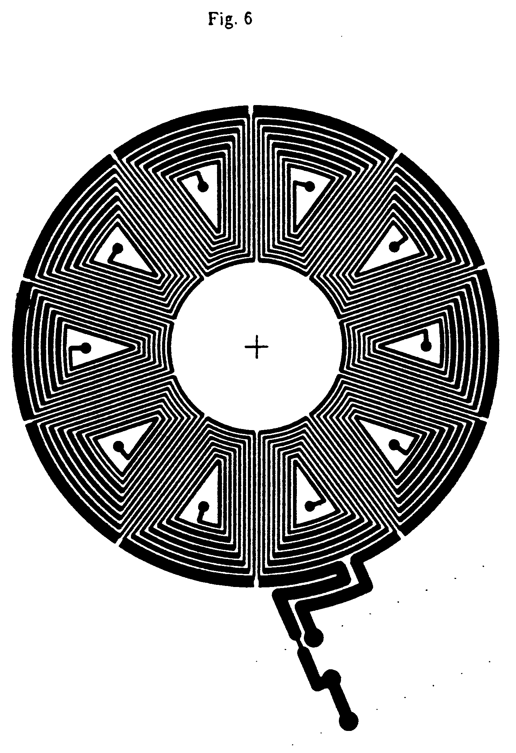

In Fig. 6 sind die erwähnten Maßnahmen zu erkennen. Eine Verstärkung der Leiterbahnen erfolgt zusätzlich an der innersten Spiralschleife, nämlich am Innendurchmesser, sowie am Außendurchmesser des Wicklungsprints. Diese Maßnahmen sind nötig, um das verstärkte Angreifen des Ätzmediums an einseitig freistehenden Bahnen zu kompensieren. Die Verbreiterung des äußersten Rückschlusses erfolgt besonders in Anbetracht einer günstigeren Einspannmöglichkeit des Multilayers.

Geht man von der Voraussetzung aus, daß die Leiterbahnbreite im magnetischen Luftspaltfeld konstant sein soll, dann erreicht man mit einer dianetralen Leiterbahnverteilung, wie sie beispielsweise in den Fig. 5 oder 6 gezeigt ist, eine höhere Leiterbahndichte und einen höheren Füllfaktor als bei einer radialen Anordnung der Leiter. Die nicht drehmomentbildende Rückführung erfolgt zweckmäßig innen wie außen durch Kreisbögen.

Ein weiterer Freiheitsgrad zur Beeinflussung der Motorbetriebseigenschaften ist die Sehnung der Wicklung. Die Sehnung der Wicklung wird bei der in Fig. 5 und 6 gezeigten Anordnung bestimmt durch die Verteilung der Spiralwindungen innerhalb eines elektrischen Poles. Je weiter die Spiralwindungen nach innen zur Polmitte führen, umso stärker gesehnt ist die Wicklung. Begnügt man sich mit wenigen Spiralwindungen am Außenrand des Poles, dann ist die Wicklung schwach gesehnt und bei einer Windung um den Polrand sogar ungesehnt. Bei in Abhängigkeit von der Rotorposition vorgegebener Stromkurvenform und bei dem durch die permanentmagnetische Anordnung geprägten Magnetfeld läßt sich ein Optimum für den Sehnungsgrad der Wicklung und somit für die Anzahl der nach innen führenden Spiralwindungen berechnen, wo die winkelabhängigen Drehmomentschwankungen minimal werden. Hierbei wird der Strombelag synchron mit der Drehung des Rotors mitgeführt. Die in Fig. 6 gezeigte Wicklung ist für sinusförmige Stromkurvenform berechnet und ausgelegt. Die Sinuskurve kann analog erzeugt werden; sie kann aber auch digital mehrstufig angenähert werden. Je höher die Auflösung des Winkelgebers ist, umso besser kann die digitale Annäherung realisiert werden.

Es besteht selbstverständlich auch die Möglichkeit, die Wicklung und den Sehnungsgrad nach anderen Motorparametern zu optimieren. Nachträglich kann eine elektronische Drehmomentkorrektur vorgenommen werden, indem die Stromkurvenform in Abhängigkeit von der Rotorposition dem vorgegebenen Wicklungslayout und dem Rotorpermanentmagnetfeld angepaßt wird. In diesem Falle wird man die nötige Stromkurve rechnerisch oder meßtechnisch ermitteln, normieren, abspeichern und beim Motorbetrieb in Abhängigkeit von der aktuellen Rotorposition den normierten Stromwert auslesen und diesen mit dem durch die Regel- oder Steuergröße vorgegebenen Stromsollwert multiplizieren. Die erforderliche Stromkurve in Abhängigkeit von Rotorwinkel kann unter der Nebenbedingung minimaler Verlustleistung aus folgender Gleichung berechnet werden:

$$IK(\varphi) = \frac{Iel \cdot \omega \; Ek(\varphi)}{Rk \cdot \sum\limits_{i=1}^{p} \dfrac{E_i(\varphi)^2}{R_i}}$$

mit I = Stromamplitude, $\varphi$ = Rotorwinkel, Iel = elektromagnetisches Drehmoment, E = induzierte Spannung bei Drehzahl , R = Phasenwiderstand, k = aktuelle Phasennummer (1 ... n), m = Anzahl Phasen, i = Laufparameter.

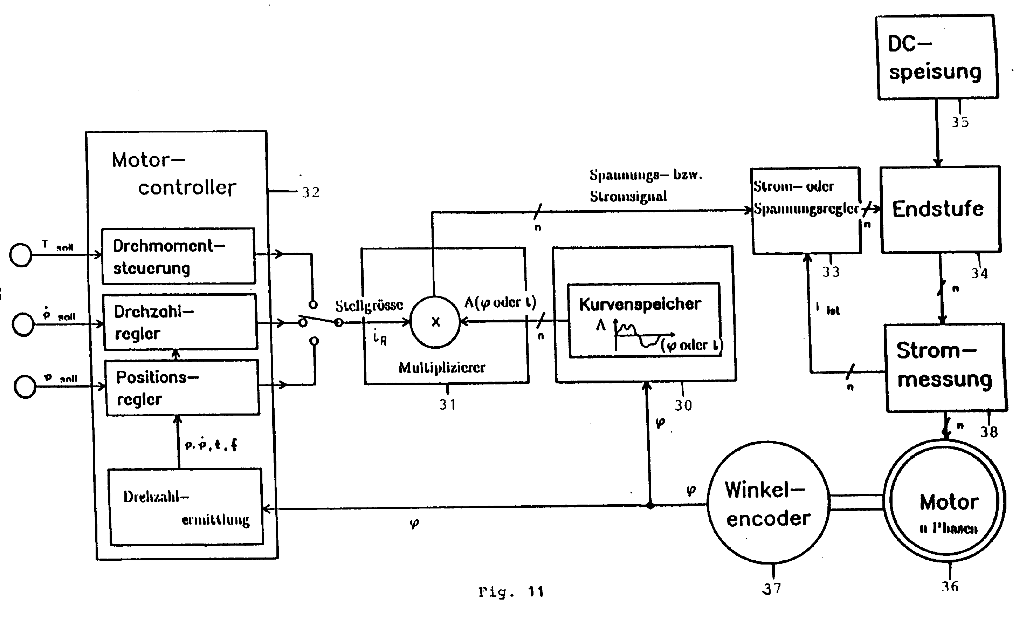

Das Produkt wird über den Leistungssteller den Motorphasen zugeführt. Eine nähere Beschreibung hierfür ist der genannten Dissertation entnehmbar, wobei ein entsprechendes Ausführungsbeispiel in Fig.11 gezeigt ist. Gemäß Fig.11 besteht eine elektronische Ansteuerschaltung aus einem Kurvenspeicher bzw. -generator 30 sowie aus einer arithmetischen Schalteinheit in Form eines Multiplizierers 31, der die Eingangssignale mit den Kurvenamplituden des Kurvenspeichers 30 nach vorgegebenen oder während des Motorbetriebs ermittelten Funktionen verknüpft.

Im Kurvenspeicher 30 sind Betriebskurven gespeichert, die eine Kompensation der Drehmomentschwankungen bewirken. Je nach Symmetrie des elektrischen oder magnetischen Kreises ist es nötig, die Kurven für alle Phasen getrennt oder nur für eine einzige Phase zu speichern. Im letzteren Fall werden mehrere, jeweils um den Phasenwinkel versetzte Kurven ausgelesen. Anstelle der Kurvenspeicher können auch Signalgeneratoren verwendet werden, die jeweils eine vordefinierte Signalkurve erzeugen.

Die Schalteinheit 31 verknüpft die rotorwinkelabhängig zur Verfügung gestellten bzw. erzeugten Kurvenamplituden-Werte mit den anliegenden Eingangssignalen bzw. Stellgrößen nach Maßgabe von vorgegebenen Funktionen.

In Abhängigkeit von dem jeweiligen Rotorwinkel wird die Stromkurve des Kurvenspeichers ausgelesen und mit einer Stromamplitude iA multipliziert, welche so gewählt ist, daß die Drehmomentschwankungen minimal werden.

Wenn der betreffende Motor ein nichtlineares Verhalten zeigt, ist es zweckmäßig, verschiedene Kurven für verschiedene Betriebsbereiche vorzusehen. Dies kann z.B. dadurch erfolgen, daß abhängig vom Betriebszustand des Motors ein Kurvenwahlschalter vorgesehen wird, oder dadurch, daß die Kurven derart verändert werden, daß diese besser an die jeweiligen Betriebszustände angepaßt sind. Eine Anpassung kann jedoch auch über eine Veränderung der Einstellgrößen erfolgen.

Die jeweilige Werte der Stromkurve können entweder in Tabellen gespeichert oder jeweils in Abhängigkeit vom Betriebszustand errechnet werden.

Die Realisierung der Ansteuerschaltung kann auf verschiedene Art und Weise erfolgen; sie kann z.B. mittels Hardware durch analoge und/oder digitale Bauelemente realisiert sein oder mittels eines Software-Programms simuliert werden.

Ferner ist es möglich, der Ansteuerschaltung zusätzlich eine Momentensteuerung oder eine Positions-, Drehzahl- oder Beschleunigungsregelung zu überlagern. Im Ausführungsbeispiel hat die Schaltung die Struktur einer Kaskadenregelung. Dem Positionsregler ist im Motorcontroller 32 intern ein Drehzahlregler und diesem extern ein Stromregler 33 unterlagert.

Im Falle der Evolventenwicklung kann die Drehmomentschwankung minimiert werden durch eine der Stromkurvenform und dem Magnetfeld angepaßte Verteilung der Wicklung. Im Gegensatz zur Spiralwicklung weist die Evolventenwicklung gleichmäßig weite Einzelwindungen auf, die als Wellenwicklung ausgeführt sind; eine Sehnung ist hier schlecht möglich. Die Anpassung der Wicklung wird erreicht durch Verteilung, nämlich durch Überlappung der einzelnen Windungen um beispielsweise jeweils eine Leiterbahnteilung (= Leiterbahnbreite + Leiterbahnabstand). Da die Windungen auf einem Layer liegen, sind im Gegensatz zur Spiralwicklung bei jeder Verteilung Durchkontaktierungen nötig.

Eine elektronische Drehmomentkorrektur analog zur Spiralwicklung ist auch bei der Evolventenwicklung möglich.

Ausführliche Informationen über die Optimierungsrechnungen und -betrachtungen sowie über die erzielten Ergebnisse finden sich in der genannten Dissertation. Ein konstantes Drehmoment wird bei Speisung mit Sinusströmen im symmetrischen 2-, 3- oder Mehrphasensystem erreicht, wenn die induzierte Spannung des Motors ebenfalls Sinusform besitzt. Die optimale Annäherung an die Sinusform wird erreicht durch die erwähnte entsprechende Sehnung der Wicklung. Bei 3-Phasensystemen stört das Vorhandensein einer dritten oder davon vielfachen Harmonischen der induzierten Spannung nicht, wenn der Sternpunkt der 3-Phasenwicklung unbeschaltet ist.

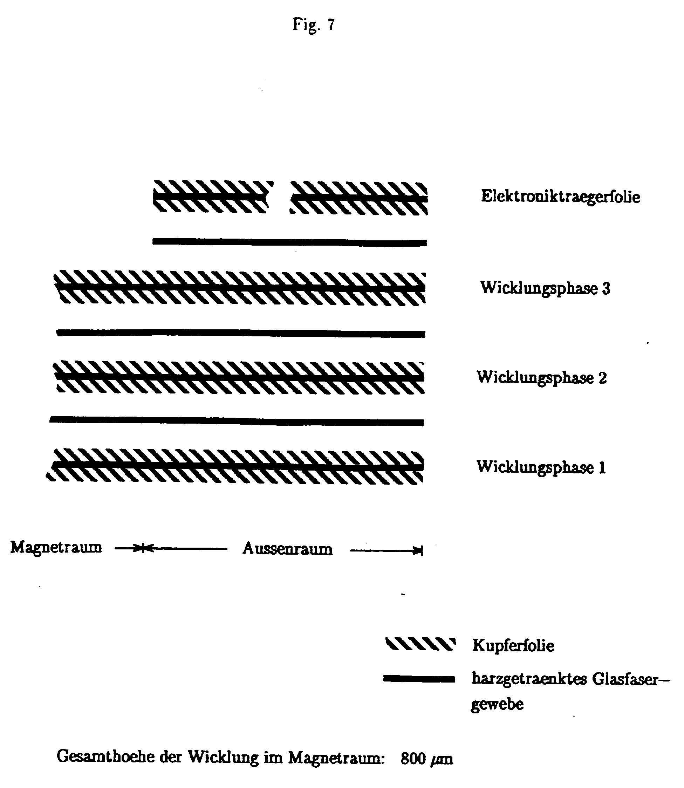

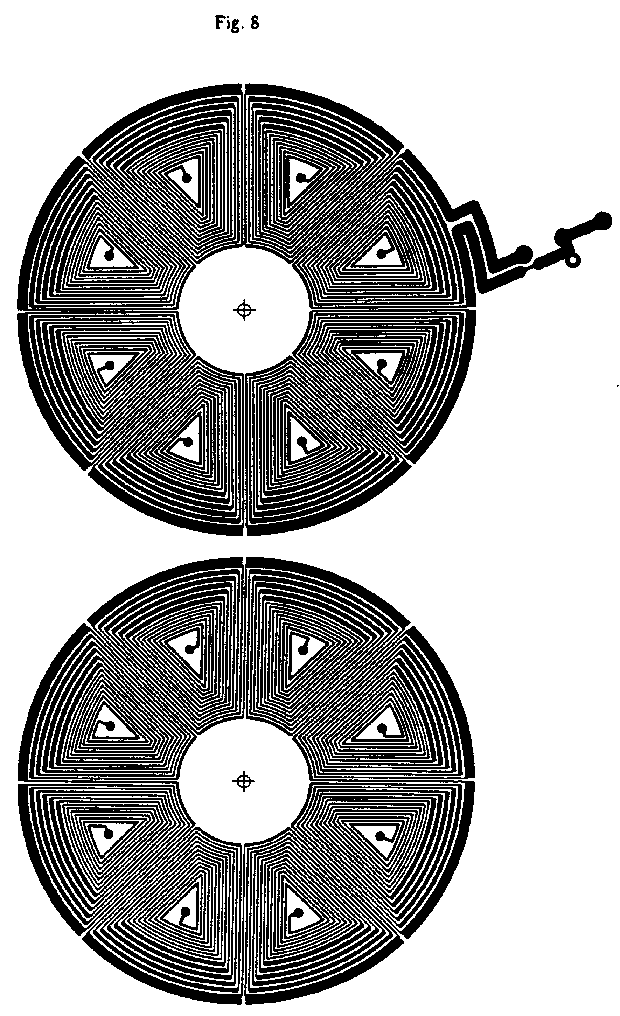

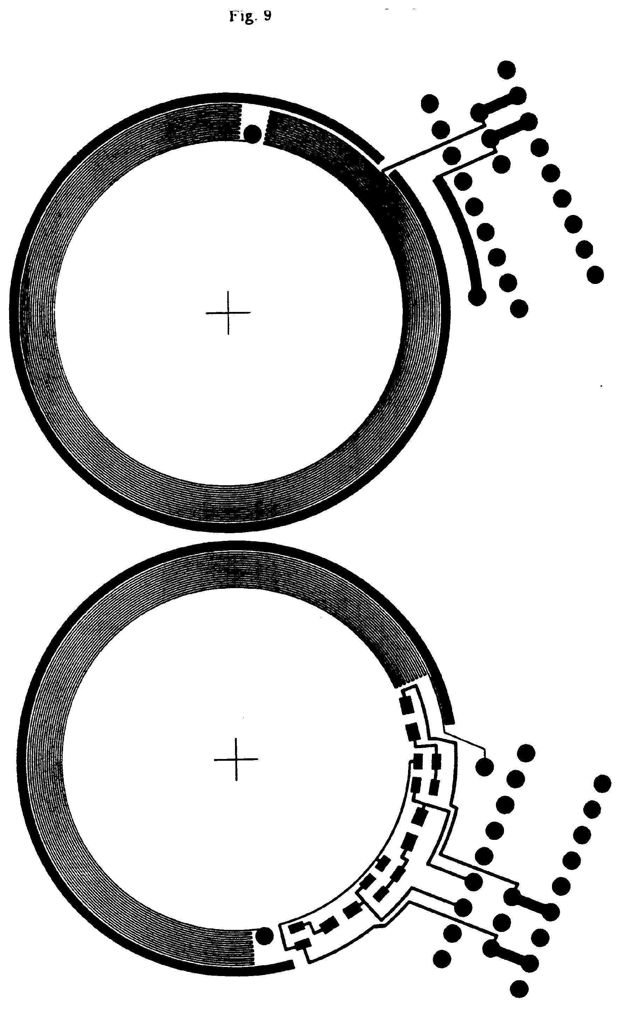

Fig. 7 zeigt den Querschnitt des Multilayers. Er besteht aus insgesamt vier doppelseitig kupferbeschichteten Isolationslagen, sowie aus drei beispielsweise harzgetränkten Glasfasergewebematten, kleberbehafteten Polyimidlagen oder anderen Isolationsschichten, die gleichzeitig als Isolationszwischenlagen und als Kleberschichten dienen. Der gesamte Verbund wird unter hoher Temperatur und großem Druck zusammengepreßt. Originalgetreue Muster der einzelnen Lagen sind in Fig. 8 und 9 zu sehen. Die Wicklungsphasen 1 (Fig. 8), 2 und 3 sind bis auf eine Winkelverschiebung von jeweils 30 Grad (geometrisch) und versetzte Wicklungszuführungen identisch. Die Elektronikträgerfolie (Fig. 9) enthält Pats für die Plazierung von SMD-Bauteilen und trägt verteilt über die äußere Randzone eine mäanderförmig geschlungene Wicklung zur widerstandsabhängigen Temperaturmessung. Diese erfolgt zeitdiskret und pulsförmig in frei wählbaren Zeitintervallen.

Da das Verhältnis von Leiterbahnabstand zur Leiterbahnhöhe oder das Verhältnis von Leiterbahnbreite zur Leiterbahnhöhe für den ätztechnischen Prozeß sehr klein ist, machen sich Unterätzungen stark bemerkbar. Um diesen Faktor zu unterdrücken, ist es möglich, mit Hilfe von Photomasken (Negativstrukturen von Fig. 9) die Leiterbahnzwischenräume abzudecken und dünne Kupferschichten galvanisch auf den photomaskenfreien Flächen aufzutragen. Im nächsten Schritt kann eine weitere Photomaske aufgebracht werden, die sich mit der ersten flächenhaft deckt und nur zu einer Erhöhung der Maske führt. Danach wird galvanisch die erste Kupferschicht verstärkt. Die Photomasken bilden quasi das Stützkorsett für den Leiterbahnaufbau, der auf diese Weise mit steilen Wänden (Flanken) realisiert werden kann. Die beschriebenen Vorgänge kann man zyklisch wiederholen, bis die nötige Kupferhöhe erreicht ist. Im Gegensatz zum gewöhnlichen Ätzprozeß weisen die Leiterbahnen keine Unterätzung auf, und im Gegensatz zu gewöhnlichen galvanischen Auftragsprozessen zeigen die Leiterbahnen keine Pilzstruktur, die zum Kurzschluß benachbarter Leiterbahnen führen kann.

Die Rundlaufgüte des Motors wird wesentlich bestimmt durch die Sehnung der Wicklung. Diese wird beeinflußt durch das Auffüllen des Wicklungspoles mit Leiterbahnen zum Mittelpunkt, das heißt zur Durchkontaktierung hin. Für rechteckförmige Ankerströme werden im Zentrum sehr große Freiräume bleiben; für sinusförmige Ansteuerung wird die Spirale bis nahe ans Zentrum fortgesetzt. Entscheidend ist hier jeweils der Abstand zwischen der innersten radial oder diametral ausgerichteten Leiterbahn und der radialen Achse durch die Wicklungsmitte.

Die Speisung des Motors mit vordefinierten Strom- oder Spannungskurvenformen erfolgt in Abhängigkeit von der Rotorposition. Die Wicklungsanordnung im Falle der spiralförmigen oder auch der evolventenförmigen Ausführung wird zweckmäßig mit starker Sehnung bzw. mit starker Verteilung ausgelegt (Grund: hohe Motorausnutzung). Eine Speisung mit blockförmigen (rechteckförmigen) Strom- oder Spannungskurven würde deshalb bei kleiner Phasenzahl eine vergleichsweise hohe Drehmomentwelligkeit verursachen. Eine für rechteckförmigen Strombetrieb geeignete konzentrierte Wicklung würde mit den vorgeschlagenen Wicklungsprinzipien infolge der wenigen auf die Polränder konzentrierten Windungen eine schlechte Kupferausnützung des Luftspaltes bedeuten. Infolgedessen ist es empfehlenswert, für die Motorspeisung Stromkurven zu wählen, die über eine im positiven und im negativen Bereich einstufige Kurvenform hinausgehen. Es muß deshalb für die Kommutierung ein Positionssignal zur Verfügung stehen, das die Auslegung einer mehrstufigen oder sogar einer analogen Strom- oder Spannungskurve erlaubt. Hierfür wurde bereits oben eine Lösung mittels hochauflösender optischer Geber mit Incrementalcode zur möglichst guten Realisierung der idealen Strom- bzw. Spannungskurve vorgeschlagen. Je nach Anwendungsfall kann es aber auch zweckmäßig sein, optische Encoder oder auch Encoder nach anderen physikalischen Prinzipien (wie kapazitiv oder magnetisch) mit absoluter digitaler Winkelinformation (beispielsweise Grey-Code) oder analoger Information einzusetzen.

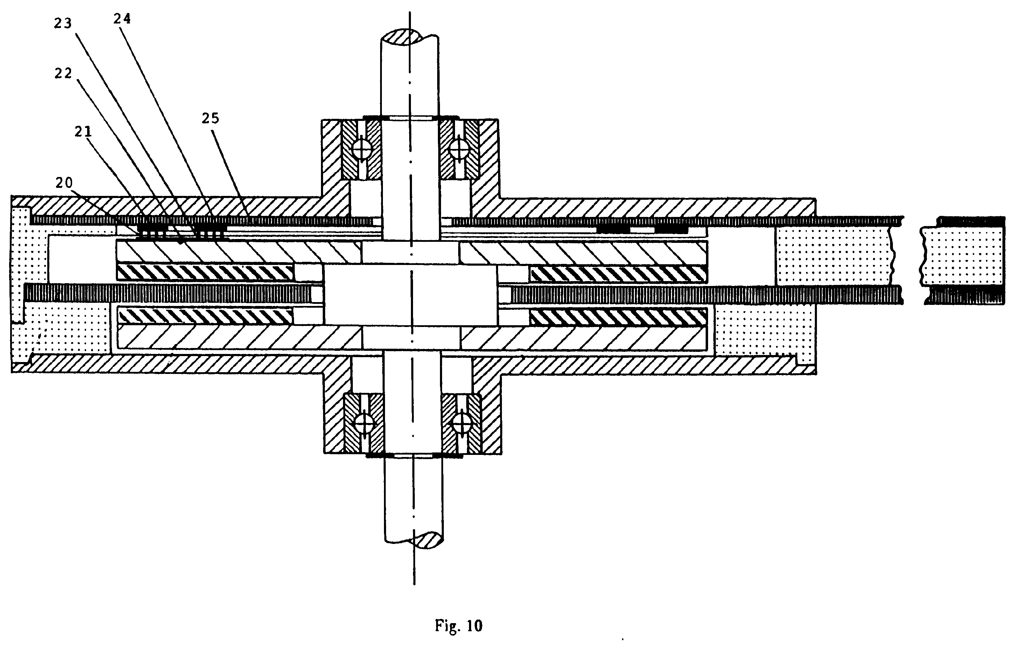

Eine Winkelerkennung mittels eines ohmschen Leitplastikpotentiometers wird in Fig. 10 dargestellt. Auf einem Träger 25, der mit dem Motorgehäuse fixiert ist, befinden sich eine Widerstandsbahn 21 sowie eine hochleitfähige Kontaktbahn 24. Die Widerstandsbahn 21 ist an zwei oder mehreren Stellen mit elektrischen Anschlüssen versehen, so daß längs dieser Bahn das elektrische Potential einer definierten Kurve folgt. Die winkelabhängige Potentialkurve kann durch mehrere Realisierungsmöglichkeiten beeinflußt werden; durch den Einsatz verschiedener Widerstandsmaterialien, durch winkelabhängige Veränderung des Bahnquerschnittes, durch eine gezielte Auswahl der elektrischen Anschlußpunkte am Widerstandsbelag oder durch eine äußere und an den Anschlußpunkten vorgenommene elektrische Beschaltung mit aktiven oder passiven Bauelementen. Das elektrische Potential der Widerstandsbahn wird mit einem Schleiferabgriff 20 abgenommen. Bei einem Motorbetrieb mit unbegrenztem Winkelbereich ist es nötig, das Schleifersignal mit einem zweiten Schleifer 23 über eine hochleitfähige Kontaktbahn wieder auf ein stehendes System rückzuübertragen. Beide Schleiferabgriffe sind mechanisch mit dem drehenden Rotor verbunden.

Um einen möglichst verschleißfreien Betrieb zu gewährleisten, ist es sinnvoll, praktisch stromlos das Potential auf der Widerstandsbahn abzugreifen. Dies kann beispielsweise über als Spannungsfolger geschaltete Operationsverstärker erfolgen.

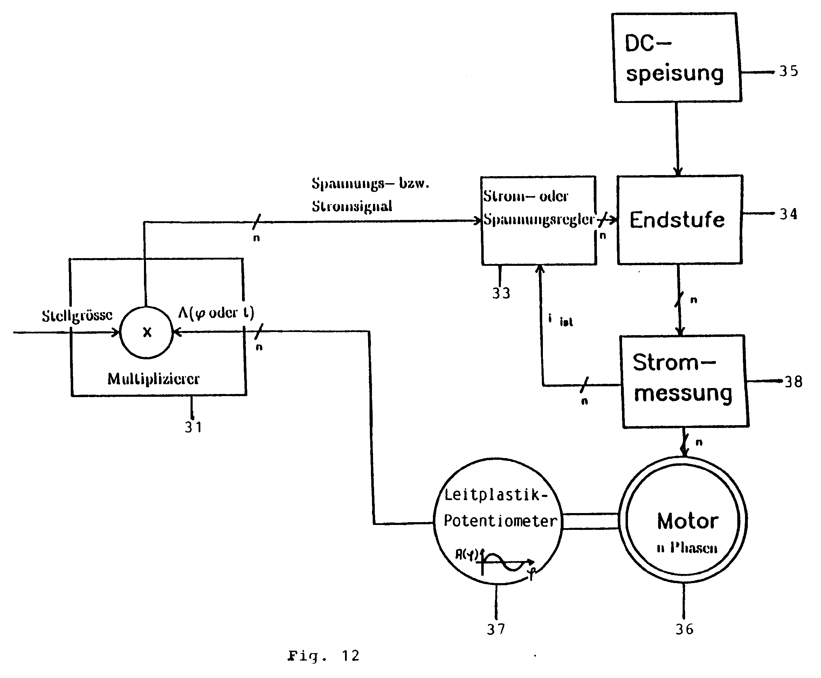

Eine Vereinfachung der in Fig.11 gezeigten Schaltung kann gemäß Fig.12 erfolgen, wenn das Potentiometer nicht ein Winkelsignal zum Auslesen der gespeicherten Strom- oder Spannungskurven liefert, sondern direkt ein Signal, das den gewünschten Strom- bzw. Spannungskurven entspricht. In diesem Fall muß die Widerstandsbahn dementsprechend derart abgeglichen werden, daß an den Schleifabgriffen ein den erforderlichen Strom- bzw. Spannungskurven entsprechendes Potential ansteht. Bei einem 3-Phasenmotor können mit Hilfe von drei, eine Phasenverschiebung von 120 Grad aufweisenden Schleifern direkt die drei erforderlichen Strom- bzw. Spannungskurven abgeglichen werden. Eine Anordnung mit zwei, z.B. um 90 Grad versetzte Schleiferabgriffe ist jedoch auch ausreichend, da aus diesen beiden Signalen die drei benötigten Phasenströme- bzw. -spannungen berechnet werden können.

Die sensorlose Winkelinformation läßt sich auch unter Ausnutzung der durch die Rotordrehung in Hilfsspulen oder der direkt in der Motorwicklung induzierten Spannung oder mittels bestimmter Harmonischer der induzierten Spannung ableiten. Diese kann über eine elektrische Auswerteschaltung Informationen über Winkelposition, Drehrichtung oder Drehzahl vermitteln.

Der Synchronmotor ist infolge seiner Konstruktions- und Funktionsweise sehr gut geeignet als Servo- bzw. Stellantrieb, insbesondere für einen flachen Einbauraum. Ebenso bietet es sich geradezu an, bei nötigen Getriebeübersetzungen Getriebe mit flacher Bauform auszuwählen und an den Motor anzuflanschen oder in den Motor zu integrieren. Solche Getriebe sind beispielsweise Harmonic-Drive-Getriebe oder Planetenradgetriebe.

**Patentansprüche**

1. Elektronisch kommutierter Synchronmotor in Form eines Linear- oder Rotationsaktuators, dessen Aktuatorelement aus einem verschiebbar bzw. drehbar gelagerten Permanentmagneten und dessen Stator aus einer Multilayerwicklung gebildet ist, dadurch gekennzeichnet, daß die Wicklung (3; 3a, 3b) aus mindestens einer gedruckten oder gestanzten Multilayerwicklung (Fig. 7) gebildet ist, deren radial außenliegenden, nicht drehmomentbildenden Leiterbahnen außerhalb des magnetischen Luftspaltfelds verbreitert sind, während die Breite der in das Luftspaltfeld eintauchenden Leiterbahnen im wesentlichen konstant ist.

2. Synchronmotorantrieb nach Anspruch 1, *dadurch gekennzeichnet*, daß die Multilayerwicklung (*Fig. 7*) zwei- oder mehrphasig ist.

3. Synchronmotorantrieb nach Anspruch 1 oder 2, *dadurch gekennzeichnet*, daß die gedruckte Multilayerwicklung (*Fig.7*) aus doppelseitig mit Metall, insbesondere Kupfer beschichteten Isolationsfolien oderPlatten sowie aus Isolations-Zwischenlagen zur gegenseitigen Isolation und gleichzeitigen mechanischen Verbindung einzelner Wicklungsebenen gebildet ist.

4. Synchronmotorantrieb nach Anspruch 3, *dadurch gekennzeichnet*, daß die Leiterbahnen (*Fig.4 bis 6, 8, 9*) der gedruckten Schaltung (*Fig.7*) aus mehreren Kupferschichten bestehen, die mit Hilfe von Masken (*Fig.8, 9*) galvanisch aufeinandergeschichtet sind.

5. Synchronmotorantrieb nach einem der vorangehenden Ansprüche, *dadurch gekennzeichnet*, daß die Wicklung selbsttragend ist und/oder mit einem Stützelement (*10*) zur mechanischen Versteifung verbunden ist, welches insbesondere gut wärmeleitend zur Abfuhr der entstehenden Verlustwärme ist.

6. Synchronmotorantrieb nach einem der vorangehenden Ansprüche, *dadurch gekennzeichnet*, daß der Rotationsaktuator als Scheibenläufermotor (*Fig.1, 2*) ausgebildet ist.

7. Synchronmotorantrieb in Form eines Scheibenläufermotors nach Anspruch 6, *dadurch gekennzeichnet*, daß die Wicklung *(3; 3a, 3b; Fig.5, 6)* eine Spiralwicklung ist.

8. Synchronmotorantrieb nach Anspruch 7, *dadurch gekennzeichnet*, daß die elektrischen Wicklungspole (*3; 3a, 3b; Fig. 5, 6*), die sich auf der Ober- und Unterseite einer jeweiligen Wicklungsebene befinden, durch vorzugsweise zumindest annähernd radiale, diametrale, parallele, azimutale oder runde Leiterbahn- bzw. Drahtabschnitte derart gebildet sind, daß eine gesehnte Wicklung entsteht.

9. Synchronmotorantrieb nach Anspruch 6, *dadurch gekennzeichnet*, daß die Wicklung (*3; 3a, 3b; Fig. 4*) eine Evolventenwicklung ist.

10. Synchronmotorantrieb nach Anspruch 9, *dadurch gekennzeichnet*, daß die elektrischen Wicklungspole (*3; 3a, 3b*) auf der Ober- und Unterseite einer jeweiligen Wicklungsebene zusätzlich durch zumindest annähernd radiale, diametrale, parallele, azimutale oder runde Leiterbahnabschnitte derart gebildet sind, daß eine verteilte Wicklung entsteht.

11. Synchronmotorantrieb nach einem der vorangehenden Ansprüche, *dadurch gekennzeichnet*, daß das jeweilige Wicklungslayout derart auf das von dem Permanentmagneten (*1a; 1a, 1b*) erzeugte Luftspaltfeld abgestimmt ist, daß bei der jeweils eingeprägten Strom- oder Spannungsform die von der Stellung des Aktuatorelements (*2*) abhängigen Drehmomentschwankungen einen Minimalwert einnehmen oder dem erreichbaren Minimum nahekommen.

12. Synchronmotorantrieb nach Anspruch 11, *dadurch gekennzeichnet,* daß die Einprägung des Stromes bzw. der Spannung nach einer Kurvenform erfolgt, die sich aus einzelnen im voraus definierten Harmonischen zusammensetzt und die insbesondere einer sinusförmigen Kurvenform entspricht.

13. Synchronmotorantrieb in Form eines Scheibenläufermotors nach einem der vorangehenden Ansprüche, *dadurch gekennzeichnet*, daß mehrere oder alle Magnetpole auf einer Magnetscheibe (*1a; 1a, 1b*) aufmagnetisiert oder jeweils aus Einzelmagneten gebildet sind.

14. Synchronmotorantrieb nach Anspruch 13, *dadurch gekennzeichnet*, daß als magnetischer Rückschluß für die Magnetpole ein diesen gleichzeitig als Träger dienendes, rotierendes Eisenjoch (*1c*) vorgesehen ist.

15. Synchronmotorantrieb nach Anspruch 13, *dadurch gekennzeichnet*, daß als magnetischer Rückschluß für die Magnetpole ein Stator vorgesehen ist, der geblecht ist oder aus massivem Ferrit-, Kunststoff-Eisen-Verbund oder anderem Material mit geringen Wirbelstrom- und Ummagnetisierungsverlusten besteht.

16. Synchronmotorantrieb in Form eines Scheibenläufermotors nach einem der vorangehenden Ansprüche, *dadurch gekennzeichnet*, daß der Permanentmagnetrotor (*1, 2)* aus mehreren längs der Rotationsachse hintereinander angeordneten und miteinander verbundenen Einzelrotoren besteht, wobei jedem Einzelrotor mindestens eine dem Luftspaltfeld desselben ausgesetzte Wicklung (*3; 3a, 3b*) zugeordnet ist.

17. Synchronmotorantrieb nach einem der vorangehenden Ansprüche, *dadurch gekennzeichnet*, daß auf der gedruckten oder gestanzten Multilayerwicklung (*3*) mindestens eine elektrische Schaltung zur Ansteuerung des Motors, zur Signalverarbeitung oder zur Ansteuerung des Lagesensors (*11 bis 14; 20 bis 24*), eines Drehzahlsensors, Temperatursensors oder anderer Sensoren, wie insbesondere Sensoren zur Erfassung optischer, mechanischer, thermischer, elektrischer oder magnetischer Größen, und/oder mindestens einer dieser Sensoren integriert sind.

18. Synchronmotorantrieb nach einem der vorangehenden Ansprüche, *dadurch gekennzeichnet*, daß die in Anspruch 17 genannten Einrichtungen im Motorgehäuse integriert sind.

## Claims

1. An electronically switched synchronous motor in the form of a linear or rotary actuator the actuator element of which consists of a displaceably or rotatably mounted permanent magnet while its stator consists of a multi-layer winding, characterised in that the winding (3, 3a, 3b) consists of at least one multi-layer winding (Fig. 7), of which the radially outer non-torque-forming conductor paths are widened out outside the magnetic air gap field whereas the width of the conductor paths entering the air gap field is substantially constant.

2. A synchronous motor drive according to Claim 1, characterised in that the multi-layer winding (Fig. 7) is two or multi-phase.

3. A synchronous motor drive according to Claim 1 or 2, characterised in that the printed multi-layer winding (Fig. 7) consists of double-sidedly metal, particularly copper, coated insulating foils or plates and intermediate insulating layers for mutual insulation and at the same time mechanical connection between individual winding planes.

4. A synchronous motor drive according to Claim 3, characterised in that the conductor paths (Figs. 4 to 6, 8, 9) of the printed circuit (Fig. 7) consist of a plurality of copper layers which are layered one upon another galvanically by means of masks (Figs. 8, 9).

5. A synchronous motor drive according to one of the preceding Claims, characterised in that the winding is self-supporting and/or is connected to a supporting element (10) for stiffening it mechanically and which is particularly readily heat-conductive to dissipate any loss heat generated.

6. A synchronous motor drive according to one of the preceding Claims, characterised in that the rotary actuator is constructed as a disc rotor motor (Figs. 1, 2).

7.  A synchronous motor drive in the form of a disc rotor motor according to Claim 6, characterised in that the winding (3, 3a, 3b; Fig. 5, 6) is a spiral winding.

8.  A synchronous motor drive according to Claim 7, characterised in that the electrical winding poles (3, 3a, 3b; Figs. 5, 6) which are on the upper or underside of a particular winding plane are so formed by preferably at least approximately radial diametral parallel azimuthal or round portions of conductor path or wire that a pitched winding is created.

9.  A synchronous motor drive according to Claim 6, characterised in that the winding (3, 3a, 3b; Fig. 4) is an involute winding.

10. A synchronous motor drive according to Claim 9, characterised in that the electrical winding poles (3, 3a, 3b) are disposed on the upper and underside of a relevant winding plane and are so formed by at least approximately radial diametral parallel azimuthal or round conductor path portions that a distributed winding is created.

11. A synchronous motor drive according to one of the preceding Claims, characterised in that the relevant winding layout is so attuned to the air gap field generated by the permanent magnet (1a; 1a, 1b) that for whichever is the imprinted current or voltage form the torque fluctuations which are dependent upon the position of the actuator element (2) assume a minimum value or come close to the attainable minimum.

12. A synchronous motor drive according to Claim 11, characterised in that the current or voltage is imprinted according to a curve form composed of individual previously-defined harmonics and corresponding particularly to a sinusoidal curve form.

13. A synchronous motor drive in the form of a disc rotor motor according to one of the preceding Claims, characterised in that a plurality of all the magnetic poles on a magnet disc (1a; 1a, 1b) are magnetised on or consist of individual magnets.

14. A synchronous motor drive according to Claim 13, characterised in that as a magnetic return for the magnetic poles a rotating iron yoke (1c) is provided which at the same time serves to carry them.

15. A synchronous motor drive according to Claim 13, characterised in that as a magnetic return for the magnetic poles, a stator is provided which is of multi-plate or solid ferrite, synthetic plastics-iron bonded or other material having low eddy current and magnetic reversal losses.

16. A synchronous motor drive in the form of a disc rotor motor according to one of the preceding Claims, characterised in that the permanent magnet rotor (1, 2) consists of a plurality of individual rotors connected to one another and disposed serially along the axis of rotation, there being associated with each individual rotor at least one winding (3; 3a, 3b) which is exposed to the air gap field thereof.

17. A synchronous motor drive according to one of the preceding Claims, characterised in that integrated onto the printed or stamped multi-layer winding (3) is at least one electric circuit for triggering the motor, for signal processing or for triggering the position sensor (11 to 14; 20 to 24), a rotary speed sensor, temperature sensor or other sensors such as in particular sensors for ascertaining optical, mechanical, thermal, electrical or magnetic magnitudes and/or at least one of these sensors.

18. A synchronous motor drive according to one of the preceding Claims, characterised in that the means mentioned in Claim 17 are integrated into the motor housing.

## Revendications

1.  Moteur synchrone commuté électroniquement sous la forme d'un organe d'actionnement linéaire ou rotatif, dont l'élément d'actionnement est formé d'un aimant permanent déplaçable ou rotatif et dont le stator est constitué d'un enroulement à couches multiples, caractérisé en ce que l'enroulement (3 ; 3a, 3b) est formé d'un enroulement à couches multiples imprimé ou découpé (Figure 7), dont les pistes conductrices se trouvant radialement à l'extérieur, ne formant pas un moment de rotation, sont élargies à l'extérieur du champ magnétique d'entrefer, tandis que la largeur des pistes conductrices pénétrant dans le champ d'entrefer est sensiblement constante.

2. Entraînement à moteur synchrone selon la revendication 1, caractérisé en ce que l'enroulement à couches multiples (Figure 7) est biphasé ou polyphasé.

3. Entraînement à moteur synchrone selon la revendication 1 ou 2, caractérisé en ce que l'enroulement à couches multiples imprimé (Figure 7) est formé de feuilles ou de plaques isolantes revêtues des deux côtés d'un métal, en particulier de cuivre, ainsi que de couches intermédiaires d'isolement en vue de l'isolement mutuel et de la liaison mécanique simultanée des différents plans de l'enroulement.

4. Entraînement à moteur synchrone selon la revendication 3, caractérisé en ce que les pistes conductrices (figures 4 à 6, 8, 9) du circuit imprimé (Figure 7) se composent de plusieurs couches de cuivre, qui sont revêtues galvaniquement à l'aide de masques (Figures 8, 9).

5. Entraînement à moteur synchrone selon l'une des revendications précédentes, caractérisé en ce que l'enroulement est autoportant et/ou est relié à un élément d'appui (10) en vue d'un renfort mécanique, qui est en particulier bon conducteur thermique en vue de l'évacuation de la chaleur de pertes se produisant.

6. Entraînement à moteur synchrone selon l'une des revendications précédentes, en ce que l'organe d'actionnement en rotation est réalisé sous la forme d'un rotor à disque (Figures 1, 2).

7. Entraînement à moteur synchrone sous la forme d'un moteur à rotor à disque selon la revendication 6, caractérisé en ce que l'enroulement (3 ; 3a, 3b ; Figures 5, 6) est un enroulement en spirale.

8. Enroulement à moteur synchrone selon la revendication 7, caractérisé en ce que les pôles électriques de l'enroulement (3 ; 3a, 3b ; Figures 5, 6), qui se trouvent sur le côté supérieur et le côté inférieur d'un plan d'enroulement respectif, sont formés par des tronçons de piste conductrice ou de fil , de préférence au moins approximativement radiaux, diamétraux, parallèles, azimutaux ou ronds, de manière à obtenir un enroulement à pas partiel.

9. Entraînement à moteur synchrone selon la revendication 6, caractérisé en ce que l'enroulement (3 ; 3a, 3b ; Figure 4) est un enroulement en développante.

10. Entraînement à moteur synchrone selon la revendication 9, caractérisé en ce que les pôles électriques de l'enroulement (3 ; 3a, 3b) sur le côté supérieur et le côté inférieur d'un plan d'enroulement respectif sont en outre formés par des tronçons de piste conductrice au moins approximativement radiaux, diamétraux, parallèles, azimutaux ou circulaires de manière à obtenir un enroulement réparti.

11. Entraînement à moteur synchrone selon l'une des revendications précédentes, caractérisé en ce que le tracé respectif de l'enroulement est réglé sur le champ d'entrefer créé par l'aimant permanent (1 ; 1a, 1b), de telle sorte que, dans le cas de la forme de courant ou de tension respective appliquée, les fluctuations du moment de rotation fonction de la position de l'élément d'actionnement (2) prennent une valeur minimale ou s'approchent du minimum pouvant être obtenu.

12. Entraînement à courant synchrone selon la revendication 11, caractérisé en ce que l'application du courant ou de la tension s'effectue selon une forme de courbe, qui se compose de différents harmoniques préalablement définis, et qui correspond en particulier à une forme de courbe sinusoïdale.

13. Entraînement à moteur synchrone sous la forme d'un moteur à rotor à disque selon une des revendications précédentes, caractérisé en ce que plusieurs ou la totalité des pôles magnétiques sont magnétisés sur un disque magnétique (1 ; 1a, 1b) ou sont formés selon le cas par différents aimants.

14. Entraînement à moteur synchrone selon la revendication 13, caractérisé en ce qu'en tant que fermeture postérieure magnétique pour les pôles magnétiques, est prévue une culasse en fer (1c) rotative, servant simultanément de support.

15. Entraînement à moteur synchrone selon la revendication 13, caractérisé en ce qu'en tant que fermeture postérieure magnétique pour les pôles magnétiques est prévu un stator, qui est feuilleté ou se compose d'un matériau composite en ferrite, en fer-matière plastique ou d'un autre matériau à faibles pertes par courant de Foucault et par inversion d'aimantation.

**16.** Entraînement à moteur synchrone sous la forme d'un moteur à rotor à disque selon l'une des revendications précédentes, caractérisé en ce que le rotor en aimant permanent (1, 2) se compose de plusieurs rotors individuels disposés en succession le long de l'axe de rotation et réunis les uns aux autres, à chaque rotor individuel étant associé au moins un enroulement (3 ; 3a, 3b) soumis au champ d'entrefer de celui-ci.

**17.** Entraînement à moteur synchrone selon l'une des revendications précédentes, caractérisé en ce que sur l'enroulement à couches multiples (3) imprimé ou découpé, sont intégrés au moins un circuit électrique pour la commande du moteur, pour le traitement de signaux ou pour la commande du capteur de position (11 à 14 ; 20 à 24), d'un capteur de vitesse de rotation, d'un capteur de température ou d'autres capteurs, comme des capteurs spéciaux en vue de la saisie de grandeurs optiques, mécaniques, thermiques, électriques ou magnétiques, et/ou au moins de l'un de ces capteurs.

**18.** Entraînement à moteur synchrone selon l'une des revendications précédentes, caractérisé en ce que les dispositifs énumérés dans la revendication 17 sont intégrés dans le boîtier du moteur.

Fig. 1

Fig. 2

Fig. 3

TEILUNG      :      500
STRICH/STEG  :      3:7
REFERENZ     :  .065 mm

11

Fig. 4

Fig. 5

Fig. 6

Fig. 7

Elektroniktraegerfolie

Wicklungsphase 3

Wicklungsphase 2

Wicklungsphase 1

Magnetraum ———⇥⇤———— Aussenraum ——————⇥

\\\\\\  Kupferfolie

▬▬▬▬  harzgetraenktes Glasfasergewebe

Gesamthoehe der Wicklung im Magnetraum:  800 $\mu$m

## Fig. 8

Fig. 9

Fig. 10

26

Fig. 11

EP 0 374 805 B1

EP 0 374 805 B1

DC–
speisung — 35

Spannungs– bzw.
Stromsignal

Strom– oder
Spannungsregler — Endstufe — 34

33

Stellgrösse    $\Lambda(\varphi$ oder $t)$

x

n

Multiplizierer

31

n

$i_{ist}$

Strom–
messung — 38

n

Leitplastik-
Potentiometer

$R(\varphi)$

Motor
n Phasen

37                    36

Fig. 12